# EUROPEAN PATENT SPECIFICATION

(11) **EP 1 596 245 B1**
(45) Date of publication and mention of the grant of the patent: **28.11.2007**
(21) Application number: 05252673.8
(22) Date of filing: 28.04.2005
(51) Int. Cl.: G02F 1/1362

(54) **Liquid crystal display device**
Flüssigkristallanzeigevorrichtung
Dispositif d'affichage à cristaux liquides

(30) Priority: 07.05.2004 JP 2004138540
(43) Date of publication of application: 16.11.2005
(73) Proprietor: Seiko Epson Corporation, Shinjuku-ku, Tokyo 163-0811 (JP)
(72) Inventor: Higa, Masakatsu, Suwa-shi Nagano-ken 392-8502 (JP); Horiguchi, Masahiro, Suwa-shi Nagano-ken 392-8502 (JP)
(74) Representative: Sturt, Clifford Mark

(56) References cited:
- WO-A-20/04011999
- US-A- 6 097 467
- US-B1- 6 335 211
- PATENT ABSTRACTS OF JAPAN vol. 2000, no. 25, 12 April 2001 (2001-04-12) -& JP 2001 235752 A (NEC CORP), 31 August 2001 (2001-08-31)

## Description

The present invention relates to a liquid crystal display device and an electronic apparatus, and more particularly, to a liquid crystal display device using vertically-oriented liquid crystals.

Recently, vertically-oriented liquid crystal devices are utilized in liquid crystal TVs, display screens of mobile phones, and so on. An example of a vertically-oriented liquid crystal display device is disclosed, for example, in Japanese Unexamined Patent Application Publication 9-236821. Specifically, a technique is disclosed in which thin film transistors are formed and pixel electrodes are formed on an interlayer insulating layer (overlayer) formed so as to cover signal lines, and electric fields (gradient electric fields) are prevented or suppressed from being generated between the pixel electrodes and the thin film transistors and/or the signal lines, thereby suppressing disorientation of the vertically-oriented liquid crystals.

However, according to the liquid crystal display device in Japanese Unexamined Patent Application Publication 9-236821, since a portion of the pixel electrode is also present on a contact hole and the pixel electrode is substantially rectangular, an aperture ratio (i.e. transmittance) is increased. However, in a region where the contact hole is formed, a concave-shaped inclined surface occurs at the surface of the pixel electrode, so that disorientation of the vertically-oriented liquid crystals may occur near the inclined surface. Also, in addition to the contact hole, disorientation of the vertically-oriented liquid crystal may also occur near a spacer that defines the thickness of the liquid crystal. The disorientation in turn causes an optical leakage, and so on, which leads to deterioration of the display, such as contrast degradation.

An advantage of the present invention is that it provides a vertically-oriented liquid crystal display device having a configuration in which the orientation of liquid crystal molecules can be properly controlled and in which the deterioration of display, such as optical leakage, can be suppressed, and further, it provides an electronic apparatus having the liquid crystal display device.
JP 2001-235752A discloses a multi-domain liquid crystal display device in which a pixel electrode has island-shaped portions connected by branch-shaped portions.

According to the present invention, there is provided a liquid crystal display device as recited is claim 1.

The liquid crystal display device according to the aspect of the invention is a vertically-oriented active matrix type liquid crystal display device, in which an insulating layer (interlayer insulating layer) is formed between a switching element and a pixel electrode, so that it is possible to prevent or suppress an electric field from occurring between the switching element and the pixel electrode. As a result, the disorientation of liquid crystal molecules due to the electric field can be prevented or suppressed.

Further, the pixel electrode is constituted by a plurality of island-shaped portions and a plurality of branch-shaped portions connecting the island-shaped portions to each other, so that a gradient electric field may be generated along the periphery of the island-shaped portion between the pixel electrode and the electrode (i.e. the opposite electrode) formed on the counter substrate. As a result, it is possible to control the orientation of the liquid crystal molecules in response to the gradient electric field. Therefore, orientation division of the liquid crystal molecules can be implemented for each island-shaped portion, so that the trouble such as disorderly orientation within the pixel electrode can be prevented or suppressed.

Furthermore, in accordance with the aspect of the invention, the insulating layer is interposed between the switching element and the pixel electrode and the contact hole is formed all over the insulating layer to have the switching element and the pixel electrode electrically connected to each other as described above. However, concave shapes are often generated at the interposing surface of the liquid crystal layer in the region where the contact hole is formed, and the disorientation of the liquid crystal molecules is apt to occur due to the concave shapes. Accordingly, it is not preferable that the contact hole is formed so as to overlap the pixel electrode in plan view. Therefore, in accordance with the aspect of the invention, the contact hole is formed in a region where the island-shaped portion and the branch-shaped portion are not formed, that is, the contact hole is formed in a region which does not contribute to display. As a result, empty spaces formed between the island-shaped portions designed for the purpose of orientation division of the liquid crystal molecules can be effectively utilized, which allows unnecessary consumption of the display region to be prevented. In this case, the disorientation of the liquid crystal molecules which may occur due to formation of the contact hole occurs in a region except the region where the pixel electrode is formed, so that the disorientation can be reduced in the pixel region as compared to a case of having the contact hole formed to overlap the pixel electrode.

Moreover, in accordance with the aspect of the invention, a spacer is disposed in at least one of the pair of substrates in order to define the thickness of the liquid crystal layer. However, the disorientation of the liquid crystal molecules is apt to occur near the spacer. In this case, the spacer is also formed in a region where the island-shaped portions of the pixel electrode and the branch-shaped portions are not formed as is done with the contact hole, so that the empty space of the pixel electrode can be effectively used and adverse effects (e.g. display spot or afterimage) on the display caused by the disorientation of the liquid crystal molecules near the spacer can be decreased. As an example of the spacer used for the liquid crystal display device of the invention, there is a spacer formed by using a resin material within the substrate surface, and specifically, a photo-spacer selectively formed by using a photolithography method.

In accordance with the liquid crystal display device of the invention, the contact hole and the spacer may be formed in a region surround by four island-shaped portions. In addition, the shape of the island-shaped portion may be any one of circle and polygon in plan view, and more particularly, the orientation division having a high order may be implemented when it is a regular polygon.

Further, the substrate provided with the spacer is formed with a light shielding portion overlapping the spacer in plan view, and an area of the light shielding portion in plan view can be larger than that of the spacer in plan view. In particular, it is preferable to dispose the light shielding portion in the substrate where the spacer is formed. In this case, positional alignment between the spacer and the light shielding portion may be accurate. In addition, a signal line for supplying a signal to the switching element is formed in the element substrate using a light shielding material, so that the region where the spacer is formed can be very properly shielded from light even when the signal line is formed to overlap the spacer in plan view.

Meanwhile, an orientation control unit that controls the orientation of liquid crystal molecules may be further provided at a position which overlaps a center portion of each of the plurality of island-shaped portions in the liquid crystal layer of the counter substrate. In this case, it is possible to define the orientation of liquid crystal molecules substantially radially from the center of the island-shaped portion. In addition, the orientation control unit may be composed of an opening that a portion of the electrode provided on the counter substrate is cut, or may be composed of a protrusion which protrudes toward the liquid crystal layer from the counter substrate, and so forth.

Next, an electronic apparatus according to another aspect of the invention includes the above-mentioned liquid crystal display device.

According to this configuration, it is possible to implement the electronic apparatus which does not have display failures, but has a wide viewing angle and a good response speed.

The invention will be described with reference to the accompanying drawings, wherein like numbers reference like elements, and wherein:
Fig. 1 is an equivalent circuit diagram of a liquid crystal display device in accordance with a first embodiment according to the invention;
Fig. 2 is a plan view illustrating an electrode configuration of the liquid crystal display device in accordance with a first embodiment;
Fig. 3 is a plan view illustrating a pixel configuration of the liquid crystal display device in accordance with a first embodiment;
Fig. 4A is a cross-sectional view taken along the line A-A' of Fig. 3;
Fig. 4B is a partial cross-sectional view taken along line B-B' of Fig. 3;
Fig. 5 is a plan view illustrating a pixel configuration of a liquid crystal display device in accordance with a second embodiment according to the invention;
Fig. 6 is a cross-sectional view taken along the line II-II' of Fig. 5;
Fig. 7 is an equivalent circuit diagram of a liquid crystal display device in accordance with a third embodiment according to the invention;
Fig. 8 is a plan view illustrating a pixel configuration of the liquid crystal display device in accordance with the third embodiment;
Fig. 9 is a plan view illustrating an alternative example of the pixel configuration of a liquid crystal display device in accordance with a second embodiment according to the invention; and
Fig. 10 is a perspective view illustrating an example of an electronic apparatus according to the invention.

### First Embodiment

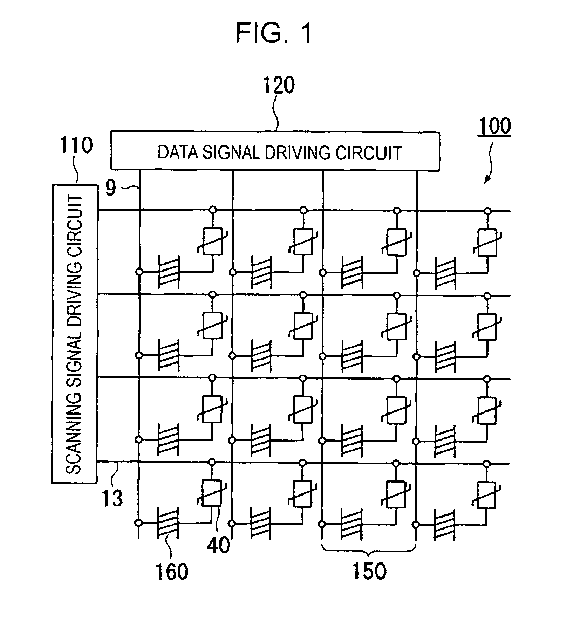

Hereinafter, a first embodiment of the present invention will be described with reference to Figs. 1 to 4. The liquid crystal display device of the embodiment is an example of an active matrix liquid crystal display device using a thin film diode (hereinafter, referred to as a TFD) as a switching element, and in particular, it is an example of a vertically-oriented liquid crystal transmissive display device. Also, the size of each layer or each member is scaled to be different from each other in the drawings so as to allow the layer or the member to be recognizable in the drawings.

Fig. 1 is an equivalent circuit diagram illustrating the liquid crystal display device 100. The liquid crystal display device includes a scanning signal driving circuit 110 and a data signal driving circuit 120. Signal lines, that is, a plurality of scanning lines 13, and a plurality of data lines 9 intersecting with the scanning lines 13 are disposed in the liquid crystal display device 100, and the scanning lines 13 are driven by the scanning signal driving circuit 110 and the data lines 9 are driven by the data signal driving circuit 120. Further, in each pixel region 150, a TFD element 40 and a liquid crystal display element (liquid crystal layer) 160 are serially connected to each other between the scanning line 13 and the data line 9. Also, the TFD element 40 is connected to the scanning line 13 and the liquid crystal display element 160 is connected to the data line 9 in Fig. 1; however, the TFD element 40 may be connected to the data line 9 and the liquid crystal display element 160 may be connected to the scanning line 13.

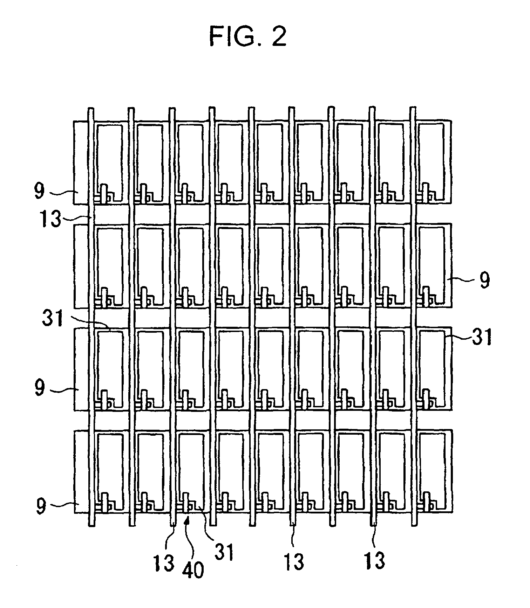

Next, a planar configuration of the electrodes of the liquid crystal display device 100 of the embodiment will be described with reference to Fig. 2. As shown in Fig. 2, in the liquid crystal display device 100 of the embodiment, pixel electrodes 31 are disposed in a matrix pattern. Each pixel electrode 31 is connected to a scanning line 13 with the TFD element 40 being interposed therebetween. The counter electrodes 9 have a rectangular shape (stripe shape) and face the pixel electrodes 31 with respect to the direction perpendicular to the sheet surface of Fig. 2. The counter electrodes 9 serve as the above-mentioned data lines, and they have a stripe shape intersecting with the scanning line 13.

In this embodiment, the pixel electrodes 31 are arranged in a matrix and each the pixel electrode 31 forms one dot region. Also, a TFD element 40 is provided for each dot region so that the display can be implemented per dot region. Although each pixel electrode 31 is shown to be schematically rectangular in Fig. 2, the pixel electrodes 31 actually have an island-shaped portion and a connecting portion, as will be described later.

Here, the TFD 40 is a switching element for electrically connecting the scanning line 13 to the pixel electrode 31, and is configured to have a metal-insulator-metal (MIM) structure having a first conductive layer having Ta as a main component, an insulating layer formed on the surface of the first conductive layer and having Ta₂O₅ as a main component, and a second conductive layer formed on the surface of the insulating layer and having Cr as a main component. Also, the first conductive layer of the TFD element 40 is connected to the scanning line 13 and the second conductive layer is connected to the pixel electrode 31.

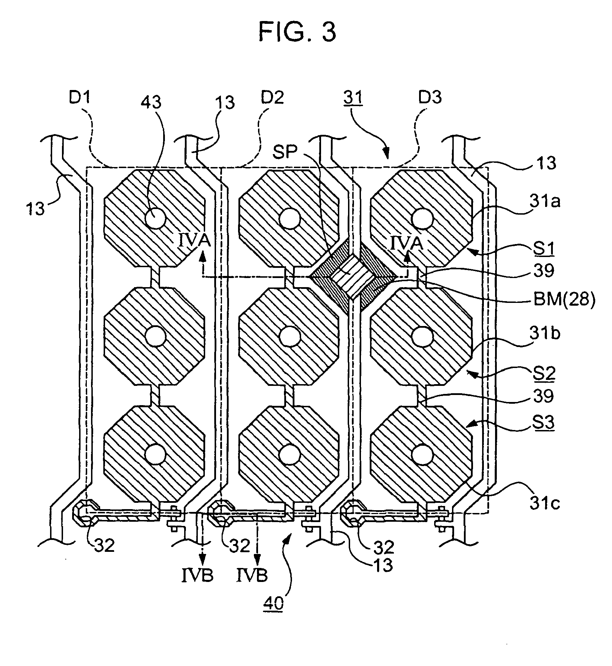

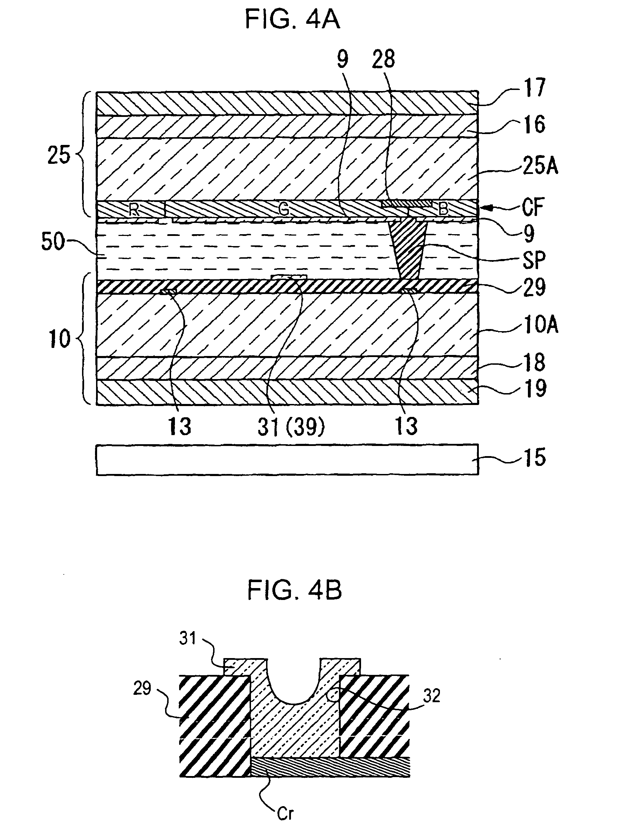

Next, a pixel configuration of the liquid crystal display device of the embodiment will be described with reference to Figs. 3 and 4. Fig. 3 is a plan view illustrating a pixel configuration of the liquid crystal display device 100, specifically, a planar configuration of the pixel electrode 31, and Fig. 4 is a view schematically illustrating a cross section taken along the line A-A' of Fig. 3. The liquid crystal display device 100 of the embodiment has dot regions each composed of the pixel electrode 31 within a region surrounded by the data line 9 and the scanning line 13, as shown in Fig. 2. Within the dot regions, coloring layers having different colors from each other among three primary colors are disposed to correspond to one dot region, and three coloring layers (blue color B, green color G, and red color R) correspond to three dot regions D1, D2, and D3 to form one pixel, as shown in Fig. 3.

The liquid crystal display device 100 of the embodiment has a liquid crystal layer 50 interposed between the bottom substrate (element substrate) 10 and the top substrate (counter substrate) 25 disposed so as to face the bottom substrate, as shown in Fig. 4, and the liquid crystal layer 50 is composed of liquid crystal materials each having a negative dielectric anisotropy indicating that its initial oriented state is vertically-oriented.

Although not all of them are shown in the cross-sectional configuration of Fig. 4A, the TFD elements 40 (see Fig. 3) are disposed between the liquid crystal layer 50 and the substrate main body 10A, which is composed of a transmissive material such as quartz or glass. In particular, the TFD elements 40 are disposed in between an insulating layer 29 and the substrate main body 10A. The scanning lines 13 for supplying signals to the TFD elements 40 are disposed in between the liquid crystal layer 50 and the substrate main body 10A. The interlayer insulating layer 29 formed so as to cover the TFD elements 40 and the scanning lines 13. Further, the pixel electrode 31 composed of a transparent conductive layer such as Indium Tin Oxide (ITO) is formed on the interlayer insulating layer 29, and the TFD element 40 and the pixel electrode 29 are electrically connected to each other with the contact hole 32 (see Fig. 3) formed in the interlayer insulating layer 29 being interposed therebetween. In addition, an orientation layer (not shown) composed of polyimide or the like is disposed on the further inner surface of the pixel electrode 31. The orientation layer is of the type for achieving an vertical alignment of the liquid crystal 50.

In particular, each pixel electrode 31 of the embodiment is configured as shown in Fig. 3 to have a plurality of island-shaped portions 31a, 31b, and 31c and branch-shaped connecting portions 39. The connecting portions 39 are interposed between adjacent ones of the island-shaped portions 31a, 31b, and 31c and electrically connect the adjacent ones of the island-shaped portions 31a, 31b, and 31c to each other. The outer contour of connecting portions 39 and the island-shaped portions 31a, 31b, and 31c can be said to define formation regions of the pixel electrodes 31. Areas outside the formation regions can be considered non-formation regions of the pixel electrodes 31. Also, in this embodiment, each of the dot regions D1, D2, and D3 is configured to be divided into a plurality of sub-dot regions S1, S2, and S3 (three sub-dot regions in Fig. 3) having substantially the same shapes.

In general, the aspect ratio of the one dot region is about 3:1 in the liquid crystal display device having the color filter, so that the shape of one sub-dot region becomes substantially circular or polygonal when three sub-dot regions S1, S2, and S3 are disposed in each of the dot regions D1, D2, and D3 in accordance with the embodiment, which preferably allows a wide viewing angle to be implemented in all directions. Each shape of the sub-dot regions S1, S2, and S3 (island-shaped portions 31a, 31b, and 31c) is substantially octagonal in Fig. 3; however, it is not limited thereto, and a circular or a polygonal shape may be applied. In other words, the slits (portions except the connecting portions 39 and 39) obtained by partially cutting the electrode are disposed between the island-shaped portions 31a, 31b, and 31c, respectively.

Meanwhile, the top substrate 25 has a color filter CF within the substrate main body 25A (on the side of the liquid crystal layer of the substrate main body 25A) composed of a transmissive material such as quartz or glass, and this color filter CF has coloring layers of R, G, and B colors. The counter electrode 9 composed of a transparent conductive layer is formed on the inner surface of the color filter CF, and an orientation layer (not shown) composed of polyimide is formed on the further inner surface of the counter electrode 9. The orientation layer acts as a vertically-orientation layer for achieving a liquid crystal molecule alignment that is vertical with respect to the layer surface. With this type of orientation layer, orientation processing such as rubbing is not performed. In addition, the counter electrode 9 is formed to have a stripe shape that extends perpendicular to the paper surface of Fig. 4. The counter electrode 9 acts as a common electrode for the plurality of dot regions extended in the direction perpendicular to the paper surface. In addition, a slit (opening) serving as an orientation control unit is formed in the counter electrode 9. Alternatively, a protrusion composed of dielectric may be employed as the orientation control unit instead of the slit.

On the other hand, a phase difference plate 18 and a polarizing plate 19 are disposed on the outer surface of the bottom substrate 10 (i.e. the side different from the surface where the liquid crystal layer 50 is interposed), and a phase difference plate 16 and a polarizing plate 17 are also disposed on the outer surface of the top substrate 25. Furthermore, a backlight 15 serving as a light source for a transmissive display is disposed outside the polarizing plate 19 provided on the bottom substrate 10.

In addition, the liquid crystal layer 50 composed of liquid crystals each having a negative dielectric anisotropy, which indicates that the initial oriented state is vertically-oriented, is disposed between the bottom substrate 10 and the top substrate 25. The spacer SP for defining the thickness of the liquid crystal layer 50 is interposed between the bottom substrate 10 and the top substrate 25. Also, the spacer SP is a photo-spacer disposed on the inner side of the top surface 25, which is formed such that acrylic resin or the like is patterned to be a columnar shape.

Slits 43 are formed in the counter electrode 9 of the top substrate 25. As shown in Fig. 3, each slit 43 is positioned at the substantial center of a corresponding island-shaped portion 31a, 31b, and 31c of the pixel electrode 31. The slits 43 are provided to control the orientation of the liquid crystal molecules of the liquid crystal layer 50, that is, in order to control the direction in which the liquid crystal molecules tilt when a voltage is applied between electrodes. As a result of the slits 43, in each sub-dot region S1, S2, and S3 an oblique (slanted) electric field is generated from the slit 43 to the periphery of the island-shaped portions 31a, 31b, and 31c, so that the liquid crystal molecules slant in a radial orientation around the slit 43.

As such, the orientation of the liquid crystal molecules is separate for each of the sub-dot regions S1, S2, and S3 to allow the liquid crystal molecules to be uniformly oriented in substantially all directions, which in turn allows the viewing angle to be uniformly enlarged in almost all directions. Also, the orientation of the ordered liquid crystal molecules may be controlled for each of the sub-dot regions S1, S2, and S3.

In this embodiment, the TFD element 40 and the pixel electrode 31 are electrically connected to each other with the contact hole 32 formed in the interlayer insulating layer 29 being interposed therebetween. As shown in Fig. 4B, because of the contact hole 32, a concave shaped portion may be formed on the inner surface of the bottom substrate 10, that is, the interposed surface of the liquid crystal layer 50. As a result, an inclined surface is formed at a portion of the interposed surface of the liquid crystal layer 50, so that the orientation of the liquid crystal molecules may be mis-aligned along the inclined surface. Therefore, it is required to shield the formation region of the contact hole 32 from light. If the contact hole 32 were formed below the pixel electrode 31, the portion of the display region would be shielded from the light, so that the aperture ratio (transmittance) would be degraded.

However, according to this embodiment, the contact hole 32 is formed in the empty space generated by dividing the pixel electrode 31 into the plurality of island-shaped portions 31a, 31b, and 31c, i.e. the non-formation region of the pixel electrode 1 within one dot region. Specifically, the contact hole 32 is formed in the empty space formed between different pixel electrodes 31 each having island-shaped portions 31a, 31b, and 31c, as shown in Fig. 3 to thereby effectively use the empty space. That is, since the contact hole 32 is formed in the region which does not contribute to display, the display region it not shielded from light even when the contact hole 32 is shielded from light, and the aperture ratio (transmittance) is not degraded. In this case, the disorientation of liquid crystal molecules which may occur due to formation of the contact hole 32 occurs in the region outside the region where the pixel electrode 31 is formed, so that the disorientation may be reduced in the pixel electrode as compared to the case of forming the contact hole overlapping the pixel electrode 31. In addition, the formation region of the contact hole 32 is shielded from light by the interconnection of the TFD element 40 composed of metal material in the embodiment.

Furthermore, in this embodiment, the spacer SP is also formed in the empty space formed between the island-shaped portions 31a, 31b, and 31c of the pixel electrode 31, that is, in the non-formation region of the pixel electrode 31. Moreover, the spacer SP is disposed at a different location than the contact hole 32. In this case, the empty spaces of the island-shaped portions 31a, 31b, and 31c can also be effectively used. In addition, although the disorientation of the liquid crystal molecules is apt to occur near the spacer SP, the spacer SP is configured to be formed in the empty space of the island-shaped portions 31a, 31b, and 31c, so that, even when the disorientation of the liquid crystal molecules occurs near the spacer SP, the effect on the display region due to the disorientation can be reduced.

In addition, in this embodiment, a light shielding portion 28 composed of a member having a light shielding property, such as chromium, is formed on the top substrate 25 where the spacer SP is formed, and an area of the light shielding portion 28 in plan view is configured to be larger than the area of the spacer SP in plan view. In particular, in this embodiment, since the light shielding portion 28 is disposed on the top substrate 25 where the spacer SP is formed, the spacer SP and the light shielding portion 28 can be accurately aligned regardless of the accuracy between the top substrate 25 and bottom substrate 10.

### Second Embodiment

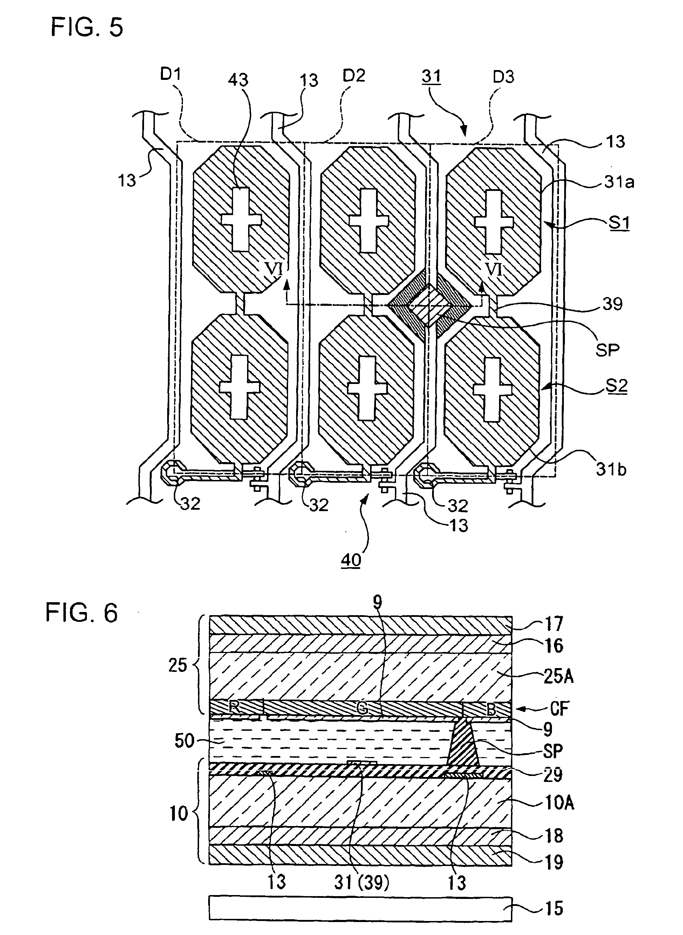

Hereinafter, the second embodiment according to the invention will be described with reference to Figs. 5 and 6. Fig. 5 is a cross-sectional view schematically illustrating the pixel configuration of the liquid crystal display device of the second embodiment, and corresponds to Fig. 3 of the first embodiment. In addition, Fig. 6 is a schematic view taken along the line B-B' of Fig. 5, which corresponds to Fig. 4A of the first embodiment. The basic configuration of the liquid crystal display device of the second embodiment is the same as in the first embodiment, but differs from the first embodiment only in the configuration of the pixel electrode. Accordingly, in Figs. 5 and 6, the same elements as in Figs. 3 and 4 are denoted by the same reference numerals, and detailed explanation thereof will be omitted.

One dot region is divided into three sub-dot regions to constitute the pixel in the first embodiment; however, one dot region is divided into two sub-dot regions S1 and S2 in the second embodiment. In such a configuration, the area of the empty space between the island-shaped portions 31a and 31b is reduced, so that it is possible to increase the aperture ratio (transmittance) as compared to the first embodiment.

Further, in the second embodiment, the spacer SP is disposed in the bottom substrate 10. The spacer SP is shielded from light by the light shielding portion 28 on the side of the top substrate 25 in the first embodiment, but it is configured to be shielded from light by the scanning lines 13 on the side of the bottom substrate 10 in the second embodiment. Specifically, the corresponding scanning lines 13 are designed such that the scanning lines 13 are composed of a metal material having a light shielding property and its width is selectively broadened in the formation region of the spacer SP so as to allow the area of the scanning lines 13 overlapping the spacer SP in plan view to be larger than the area of the spacer SP when in plan view.

Further, since the liquid crystal display device of the embodiment is a vertically-oriented normally black liquid crystal display device, is not required to form a black matrix in the color filter CF because the formation region of the spacer SP is light-shielded (light is blocked) by the scanning lines 13 and the contact hole 32 is light-shielded by the TFD element 40. The areas around the island-shaped portions 31a, 31b will not be visible during bright (white) display.

### Third Embodiment

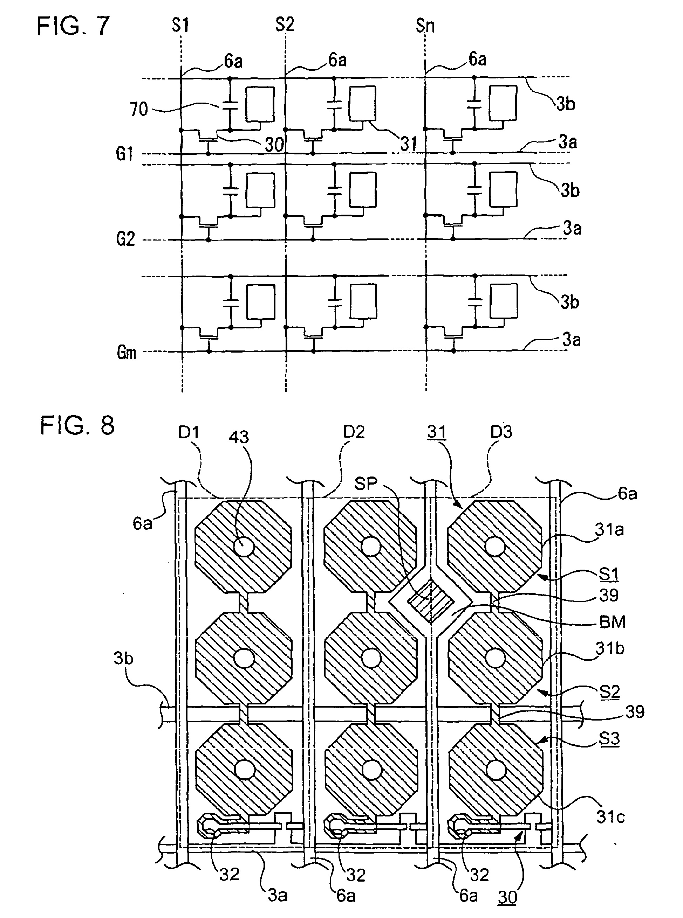

Hereinafter, the third embodiment according to the invention will be described with reference to Figs. 7 and 8. Fig. 7 is an equivalent circuit view of the liquid crystal display device of this embodiment, and Fig. 8 is a plan view illustrating one pixel of the liquid crystal display device of the embodiment, which is a schematic view corresponding to Fig. 3 of the first embodiment. In addition, in Fig. 8, the same elements as in Fig. 3 are denoted by the same reference numerals, and detailed explanation thereof will be omitted.

The liquid crystal display device of this embodiment is an active matrix type liquid crystal display device using a thin film transistor (hereinafter, referred to as TFT) as a switching element, and also an example of a vertically-oriented liquid crystal display device.

In the liquid crystal display device of the embodiment, as shown in Fig. 7, the pixel electrodes 31 and the TFTs 30 serving as the switching elements for controlling the pixel electrodes 31 are formed in a plurality of dots arranged in a matrix shape which constitute the image display region, respectively, and the data lines 6a to which the image signals are supplied are electrically connected to the sources of the TFTs 30, respectively. The image signals S1, S2, ..., and Sm for writing data are supplied in this order to the data lines 6a in a linear and sequential manner or supplied to each group with respect to adjacent data lines 6a.

Further, the scanning lines 3a are electrically connected to the gates of the TFT 30, and scanning signals G1, G2, ..., and Gm are linearly and sequentially applied to the plurality of scanning lines 3a in pulses at a predetermined timing. Also, the pixel electrodes 31 are electrically connected to drains of the TFTs 30, wherein the image signals S1, S2, ..., and Sn supplied from the data lines 6a are written at a predetermined timing by having the TFTs 30 serving as the switching elements turned on only for a predetermined period.

Image signals S1, S2, ... , and Sn having predetermined levels which are written in the liquid crystal via the pixel electrodes 31 are retained between the pixel electrodes and the common electrode formed in the counter substrate for a predetermined period. The liquid crystal modulates the light by changing the order or the orientation of molecular clusters by means of the applied voltage level, so that the gray scale display can be implemented. In this case, in order to prevent the retained image signal from leaking, a cumulative capacitor 70 connected in parallel to the liquid crystal capacitor formed between the pixel electrode 31 and the common electrode is added. And the reference numeral 3b indicates a capacity line.

Next, a planar configuration of the pixel constituting the liquid crystal display device of the embodiment will be described with reference to Fig. 8. As shown in Fig. 8, data lines 6a and scanning lines 3a are disposed along vertical and horizontal boundaries of the pixel electrode 31, respectively, and inside of the region where each pixel electrode 31, the data lines 6a and the scanning lines 3a disposed to surround the pixel electrode 31 are formed is one dot region, so that the display can be implemented per dot region which is arranged in a matrix shape.

Also in the third embodiment, one dot region is divided into three sub-dots S1, S2 and S3 so as to control the orientation of the liquid crystal molecules while the slits 43 are formed in counter electrodes (not shown) formed in the counter substrate. That is, the pixel electrode 31 is constituted by the plurality of island-shaped portions 31a, 31b and 31c, and portions connecting the island-shaped portions to each other (i.e. branch-shaped portions 39 and 39).

Furthermore, as is done with the first embodiment, the contact hole 32 for electrically connecting the TFT 30 to the pixel electrode 31 and the spacer SP for defining the thickness of the liquid crystal layer are formed in empty spaces formed between island-shaped portions. In particular, the spacer SP is shielded from light by the data line 6a. Specifically, the data line 6a is composed of a metal material having a light shielding property, and is designed such that the data line is selectively extended in the region where the spacer SP is formed so as to allow the planar area of the data line 6a overlapping the spacer SP in plan view to be larger than the planar area of the spacer SP in plan view. In addition, the region where the contact hole 32 is formed is shielded from light by the interconnection of the TFT 30.

In the third embodiment as described above, the contact hole 32 and the spacer SP are formed in the empty space so as to effectively use the empty space formed by dividing pixel electrode 31 into the plurality of island-shaped portions. Thereby, the aperture ratio (transmittance) of the display can be suppressed from being degraded based on the formation of the contact hole 32 and the spacer SP. In addition, since the liquid crystal display device of the embodiment is a vertically-oriented normally black liquid crystal display device, it is not required to form the black matrix in the color filter CF because the formation region of the spacer SP is light-shielded by the data line 6a and the contact hole 32 is light-shielded by the interconnection of the TFT 30. In addition, in the embodiment, the capacity line 3b is positioned between two sub-dots S2 and S3, which may suppress the aperture ratio affected by the capacity line 3b from being degraded.

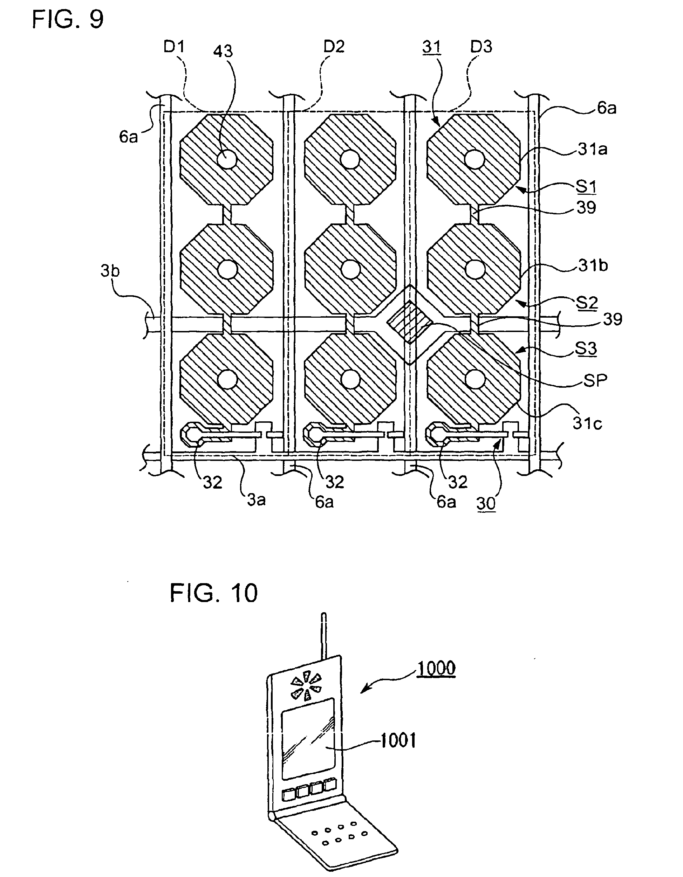

In addition, the width of the data line 6a is extended to shield the region where the spacer SP is formed in the embodiment as shown in Fig. 8; however, the width of the capacity line 3b may be extended to shield the region where the spacer SP is formed as shown in Fig. 9.

### Fourth Embodiment

Next, a specific example of the electronic apparatus having the above-mentioned liquid crystal display device will be described. Fig. 10 is a perspective view illustrating an example of a mobile phone. Referring to Fig. 9, a reference numeral 1000 denotes a main body of the mobile phone, and 1001 denotes a display portion using the liquid crystal display device. When the liquid crystal display device of the above-mentioned embodiment is used for the display portion of the electronic apparatus such as the mobile phone, it is possible to implement the electronic apparatus having the liquid crystal display portion which has not display failure, but has a wide viewing angle and a good response speed.

In addition, the technical scope of the invention is not limited to the above-mentioned embodiments, but may be varied without departing from the spirit of the invention. For example, slits (openings) have been provided in the electrodes as the orientation control unit in the above-mentioned embodiments; however, protrusions protruding toward the liquid crystal layer may also have the same operation and effects as the slits. In addition, a transmissive type liquid crystal display device has been described in the embodiments; however, it is possible to apply the invention to the reflective type or transflective type liquid crystal display device.

## Claims

1. A liquid crystal display device for displaying an image comprising:
an element substrate (10);
a counter substrate (25);
a liquid crystal layer (50) interposed between the element substrate and the counter substrate, the liquid crystal layer including liquid crystals having a negative dielectric anisotropy, indicating that an initial oriented state is vertically-oriented;
a plurality of switching elements (40) formed in between the liquid crystal layer and the element substrate;
an insulating layer (29) formed in between the liquid crystal layer and the plurality of switching elements, the insulating layer being formed with a plurality of contact holes (32) at respective first locations;
a plurality of pixel electrodes (31) disposed in between the liquid crystal layer and the insulating layer, the pixel electrodes each being disposed at a region which contributes to the image, each pixel electrode including a plurality of island-shaped portions (31 a, 31b, 31c) and a branch-shaped portion (39) connecting the island-shaped portions to each other wherein an empty space is formed between the branch portion connecting two adjacent island shaped portions of one pixel electrode and the branch portion connecting two adjacent island shaped portions of the reighbouring electrode, the pixel electrodes being connected to respective switching elements through respective contact holes in the insulating layer;
**characterised in that** the device further comprises
a spacer (SP) that sets the thickness of the liquid crystal layer, the spacer being provided at a second location that is different from the first locations, both the first locations and the second location overlapping regions which do not contribute to the image in plan view, the second location being in the empty space.

2. The liquid crystal display device according to Claim 1, further comprising a light shielding portion (28) disposed in between the liquid crystal layer and one of the element substrate and the counter substrate, the light shielding portion overlapping the spacer in plan view, the light shielding portion having an area in plan view that is larger than that of the spacer in plan view.

3. The liquid crystal display device according to Claim 1, further comprising a signal line (13) that supplies signals to the switching elements, the signal line being composed of a light shielding material and being disposed between the liquid crystal layer and the element substrate at a position that overlaps the spacer in plan view.

4. The liquid crystal display device according to Claim 1, further comprising:
an orientation control unit (43) disposed between the counter substrate and the liquid crystal layer, the orientation control unit controlling the orientation of liquid crystal molecules, the orientation control unit being provided at a position that overlaps a center portion of each of the plurality of island-shaped portions in plan view.

5. The liquid crystal display device according to Claim 1, wherein each of the island-shaped portions has a polygonal or substantially circular planar shape.

## Patentansprüche

1. Flüssigkristallvorrichtung zum Anzeigen eines Bildes, umfassend:
ein Elementsubstrat (10);
ein Gegensubstrat (25);
eine Flüssigkristallschicht (50), die zwischen dem Elementsubstrat und dem Gegensubstrat angeordnet ist, wobei die Flüssigkristallschicht Flüssigkristalle mit einer negativen dielektrischen Anisotropie enthält, die anzeigen, dass ein anfänglich orientierter Zustand vertikal orientiert ist;
mehrere Schaltelemente (40), die zwischen der Flüssigkristallschicht und dem Elementsubstrat gebildet sind;
eine Isolierschicht (29), die zwischen der Flüssigkristallschicht und den mehreren Schaltelementen gebildet ist, wobei die Isolierschicht mit mehreren Kontaktlöchern (32) an entsprechenden ersten Stellen gebildet ist;
mehrere Pixelelektroden (31), die zwischen der Flüssigkristallschicht und der Isolierschicht angeordnet sind, wobei die Pixelelektroden in einer Region angeordnet sind, die zu dem Bild beiträgt, wobei jede Pixelelektrode mehrere inselförmige Abschnitte (31a, 31b, 31c) und einen astförmigen Abschnitt (39) enthält, der die inselförmigen Abschnitte miteinander verbindet, wobei ein leerer Raum zwischen dem astförmigen Abschnitt, der die angrenzenden inselförmigen Abschnitte einer Pixelelektrode verbindet, und dem astförmigen Abschnitt, der die angrenzenden inselförmigen Abschnitte einer benachbarten Pixelelektrode miteinander verbindet, gebildet ist, wobei die Pixelelektrode mit entsprechenden Schaltelementen durch entsprechende Kontaktlöcher in der Isolierschicht verbunden ist;
**dadurch gekennzeichnet, dass** die Vorrichtung des Weiteren umfasst:
einen Abstandshalter (SP), der die Dicke der Flüssigkristallschicht einstellt, wobei der Abstandshalter an einer zweiten Stelle bereitgestellt ist, die sich von den ersten Stellen unterscheidet, wobei sowohl die ersten Stellen wie auch die zweite Stelle Regionen in der Draufsicht überlappen, die nicht zu dem Bild beitragen, wobei sich die zweite Stelle im leeren Raum befindet.

2. Flüssigkristallanzeigevorrichtung nach Anspruch 1, des Weiteren umfassend einen Lichtabschirmungsabschnitt (28), der zwischen der Flüssigkristallschicht und entweder dem Elementsubstrat oder dem Gegensubstrat angeordnet ist, wobei der Lichtabschirmungsabschnitt den Abstandshalter in der Draufsicht überlappt und der Lichtabschirmungsabschnitt eine Fläche in der Draufsicht hat, die größer als jene des Abstandshalters in der Draufsicht ist.

3. Flüssigkristallanzeigevorrichtung nach Anspruch 1, des Weiteren umfassend eine Signalleitung (13), die Signale zu den Schaltelementen leitet, wobei die Signalleitung aus einem Lichtabschirmungsmaterial besteht und zwischen der Flüssigkristallschicht und dem Elementsubstrat an einer Position angeordnet ist, die den Abstandshalter in der Draufsicht überlappt.

4. Flüssigkristallanzeigevorrichtung nach Anspruch 1, des Weiteren umfassend:
eine Orientierungssteuereinheit (43), die zwischen dem Gegensubstrat und der Flüssigkristallschicht angeordnet ist, wobei die Orientierungssteuereinheit die Orientierung der Flüssigkristallmoleküle steuert und die Orientierungssteuereinheit an einer Position bereitgestellt ist, die einen mittleren Abschnitt jedes der mehreren inselförmigen Abschnitte in der Draufsicht überlappt.

5. Flüssigkristallanzeigevorrichtung nach Anspruch 1, wobei jeder der inselförmigen Abschnitte eine polygonale oder im Wesentlichen kreisförmige planare Form aufweist.

## Revendications

1. Dispositif d'affichage à cristaux liquides pour afficher une image, comprenant :
un élément de substrat (10) ;
un contre substrat (25) ;
une couche de cristaux liquides (50) intercalée entre l'élément de substrat et le contre substrat, la couche de cristaux liquides incluant des cristaux liquides ayant une anisotropie diélectrique négative, indiquant qu'un état d'orientation initial est d'une orientation verticale ;
une pluralité d'éléments de commutation (40) formés entre la couche de cristaux liquides et l'élément de substrat ;
une couche isolante (29) formée entre la couche de cristaux liquides et la pluralité des éléments de commutation, la couche isolante étant formée avec une pluralité d'orifices de contact (32) au niveau de premiers emplacements respectifs;
une pluralité d'électrodes de pixel (31) disposées entre la couche de cristaux liquides et la couche isolante, les électrodes de pixel étant disposées chacune dans une zone qui contribue à l'image, chaque électrode de pixel incluant une pluralité de parties en forme d'îlot (31a, 31b, 31c) et une partie en forme de ramification (39) connectant les parties en forme d'îlot les unes aux autres, un espace vide étant formé entre la partie à ramification connectant deux parties en forme d'îlot adjacentes d'une électrode de pixel et la partie à ramification connectant deux parties en forme d'îlot adjacentes de l'électrode voisine, les électrodes de pixel étant connectées à des éléments de commutation respectifs à travers des orifices de contact respectifs dans la couche isolante ;
**caractérisé en ce que** le dispositif comprenne par ailleurs
un élément d'espacement (SP) qui fixe l'épaisseur de la couche de cristaux liquides, l'élément d'espacement étant fournit au niveau d'un deuxième emplacement différent des premiers emplacements, les premiers emplacements tout comme le deuxième emplacement se superposant à des zones qui ne contribuent pas à l'image en vue en plan, le deuxième emplacement se trouvant dans l'espace vide.

2. Dispositif d'affichage à cristaux liquides selon la revendication 1, comprenant en outre une partie de protection de la lumière (28) disposée entre la couche de cristaux liquides et l'un parmi l'élément de substrat et le contre substrat, la partie de protection de la lumière se superposant à l'élément d'espacement en vue en plan, la partie de protection contre la lumière possédant une zone en vue en plan qui est plus grande que celle de l'élément d'espacement en vue en plan.

3. Dispositif d'affichage à cristaux liquides selon la revendication 1, comprenant en outre une ligne d'acheminement des signaux (13) qui fournie des signaux aux éléments de commutation, la ligne d'acheminement des signaux se composant d'une matière de protection contre la lumière et étant disposée entre la couche de cristaux liquides et l'élément de substrat au niveau d'un emplacement qui se superpose à l'élément d'espacement en vue en plan.

4. Dispositif d'affichage à cristaux liquides selon la revendication 1, comprenant en outre:
une unité de contrôle de l'orientation (43) disposée entre le contre substrat et la couche de cristaux liquides, l'unité de contrôle de l'orientation contrôlant l'orientation des molécules de cristaux liquides, l'unité de contrôle de l'orientation étant fournie en un emplacement qui se superpose à une partie de centre de chacune parmi la pluralité des parties en forme d'îlot en vue en plan.

5. Dispositif d'affichage à cristaux liquides selon la revendication 1, chacune des parties en forme d'îlot possédant une forme polygonale ou une forme essentiellement cir-culaire et plane.
